(19) Europäisches Patentamt
European Patent Office
Office européen des brevets

(11) Veröffentlichungsnummer: **0 049 836**
**B1**

# (12) EUROPÄISCHE PATENTSCHRIFT

(45) Veröffentlichungstag der Patentschrift: **05.12.84**

(51) Int. Cl.[3]: **B 01 D 19/04**, C 08 G 77/46 // C09D7/00

(21) Anmeldenummer: **81107854.2**

(22) Anmeldetag: **02.10.81**

(54) **Verwendung von Polyoxyalkylen-Siloxan-Copolymeren als Entschäumer für Kunststoffdispersionen und Dispersionsbeschichtungsstoffe.**

(30) Priorität: **15.10.80 DE 3038982**

(43) Veröffentlichungstag der Anmeldung: **21.04.82 Patentblatt 82/16**

(45) Bekanntmachung des Hinweises auf die Patenterteilung: **05.12.84 Patentblatt 84/49**

(84) Benannte Vertragsstaaten: **BE DE FR GB IT NL**

(56) Entgegenhaltungen:
**EP - A - 0 003 285**
**EP - A - 0 025 822**
**FR - A - 2 088 522**
**FR - A - 2 137 935**
**FR - A - 2 184 576**
**FR - A - 2 279 843**
**US - A - 3 629 308**

(73) Patentinhaber: **BAYER AG, Konzernverwaltung RP Patentabteilung, D-5090 Leverkusen 1 Bayerwerk (DE)**

(72) Erfinder: **Steinberger, Helmut, Dr., Winand-Rossi-Strasse 36, D-5090 Leverkusen 1 (DE)**
Erfinder: **Clarenz, Werner, Dr., Walter-Flex-Strasse 32, D-5090 Leverkusen 1 (DE)**

**EP 0 049 836 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft die Verwendung eines Produkts bestehend aus

a) 80 bis 100 Gew.-% eines Polyoxyalkylen-Siloxan-Copolymers der allgemeinen Formel:

$$[R^1Si(OSiR_2)_n]_m Z_{m-1} (OR^2)_{m+2},$$

in der

R eine gegebenenfalls halogensubstituierte Alkylgruppe mit bis zu 4 C-Atomen,

$R^1$ den Substituenten R bzw. einen Phenylrest,

$R^2$ eine Gruppe der Zusammensetzung

$$R^3(OCH_2CH_2)_x(OCH_2\overset{\overset{CH_3}{|}}{C}H)_y-,$$

Z eine difunktionelle Einheit –O– oder

$$\left[-O-\overset{\overset{R^4}{|}}{\underset{\underset{R^4}{|}}{C}}-\right]_p O-$$

darstellt, wobei

$R^3$ einen Kohlenwasserstoffrest mit bis zu 6 C-Atomen,

$R^4$ unabhängig voneinander Wasserstoff oder $R^3$,

n eine Zahl zwischen 3 und 40,

m eine Zahl zwischen 1 und 15,

x eine Zahl zwischen 0 und 68,

y eine Zahl zwischen 0 und 52,

x+y eine Zahl zwischen 1 und 68,

p eine Zahl zwischen 2 und 12 bedeutet, und

b) 0–20 Gew.-% eines hydrophoben Siliciumoxids als Entschäumer für Kunststoffdispersionen und Dispersionsbeschichtungsstoffe.

Entschäumer sind ein wesentlicher Bestandteil bei der Verarbeitung von Kunststoffdispersionen, wie beispielsweise Butadien-, Styrol-, Acrylat-, Polyvinylpyrrolidon-, Polyvinylacetatdispersionen bzw. Dispersionen ihrer Copolymeren miteinander. Bei der Handhabung, beispielsweise beim Rühren, Pumpen, Anreiben auf Dissolvern, Perlmühlen oder anderen Aggregaten, bei der Verarbeitung mit Pinseln, Spritzen oder bei der Vergiessung lässt sich das Einmischen von Luft oft nicht vermeiden.

Besonders bei höheren Viskositäten der Beschichtungsstoffe ($<100$ mPa·s) wird während der Verarbeitung mehr Schaum erzeugt als sich im gleichen Zeitraum abbauen kann. Daraus ergeben sich Verzögerungen im Produktions- oder Verarbeitungsablauf und fehlerhafte Oberflächen bei Beschichtungen, wenn sich nach erfolgter Verarbeitung des Beschichtungsmittels im Beschichtungsmaterial noch Schaumblasen befinden.

Zur Behebung dieser Nachteile wurde der Einsatz verschiedener Entschäumer versucht.

Handelsübliche Silicon-Entschäumer gelten als besonders schnell wirksam, aber die zur Entschäumung notwendige Zusatzmengen verursachen häufig Krater, Unregelmässigkeiten und Verlaufsstörungen in den beschichteten Oberflächen.

Entschäumer auf Mineralölbasis wirken nicht schnell genug, um beim Auftrocknen des Lackes blasenfreie Beschichtungen zu erhalten.

Dieser Mangel wird durch die erfindungsgemässen Entschäumer behoben. Sie besitzen für Beschichtungsmaterialien auf Basis von Dispersionen ausgezeichnete entschäumende Wirkung ohne den Verlauf oder die Eigenschaften der Oberfläche nachteilig zu beeinflussen.

Die für die Herstellung der Entschäumungsmittel erforderlichen Polyoxyalkylen-Polysiloxan-Copolymeren sind an sich bekannte Stoffe. Ihre Herstellung erfolgt durch Umsetzung von Polyetherolen mit siliciumfunktionellen Siloxanen gemäss einem älteren Vorschlag (EP-A-25 822) mit der Priorität 21.07.79 DE 2 929 588, veröffentlicht am 1.04.81) Dazu werden z.B. Polyetherole in stöchiometrischem Verhältnis in Gegenwart eines Säurefängers mit linearen oder verzweigten äquilibrierten acyloxyhaltigen Organopolysiloxanen umgesetzt, deren Herstellung in der DT-OS 2 802 668 beschrieben ist.

Für die Herstellung von Entschäumungsmitteln für Dispersionsbeschichtungsstoffe ist es wichtig, die Stöchiometrie zwischen den hydroxyfunktionellen Polyetherolgruppen und der Menge der Acyloxygruppen der Organopolysiloxane genau einzuhalten.

Ein stöchiometrischer Überschuss des Polyetheranteils kann sich ungünstig in der Entschäumeraktivität auswirken. Das Vorliegen von chemisch nicht an Polyethermoleküle angebundenen Siloxananteilen kann Kraterbildung in den damit hergestellten Lackfilmen verursachen.

Der Anteil des Polyether-Siloxan-Copolymeren an der erfindungsgemässen Entschäumerzubereitung kann 80 bis 100 Gew.-% des gesamten Mittels ausmachen, vorzugsweise liegt es jedoch in einer Menge von 90 bis 94% vor.

In den Siloxan-Polyoxyalkylen-Copolymeren der allgemeinen Formel

$$[R^1Si(OSiR_2)_n]_m Z_{m-1} (OR^2)_{m+2}$$

kann die Zahl der Dimethylsiloxaneinheiten, wie sie durch n und m definiert wird, von 6 bis 40 reichen, wobei n zwischen 2 und 50 liegt und m von 3 bis 9 reicht.

Besonders bevorzugt sind für die Entschäumung von Kunststoffdispersionen Siloxan-Polyoxyalkylen-Copolymere der oben angegebenen Struktur, bei denen n zwischen 6 und 20 liegt und m 2 oder 3 beträgt.

Der durch die Gruppierung $OR^2$ gekennzeichnete Polyetheranteil des Siloxan-Polyoxyalkylen-Copolymeren besteht vorzugsweise aus Strukturen der Formel

$$C_4H_9O \rightarrow [CH_2CH_2O]_y\,[CH_2\overset{\overset{CH_3}{|}}{C}HO]_y-H,$$

in denen der Wert x zwischen 8 und 40 schwankt und der Wert für y vorzugsweise zwischen 6 und 30 liegt.

Beispiele für die Gruppen R sind die Methyl-, Chlormethyl-, Ethyl- und Propylreste, $R^3$ ist vorzugsweise ein $OC_4H_9$-Rest, möglich sind jedoch ebenfalls $CH_3O-$, $C_2H_5O-$, $C_3H_7O-$ oder $C_3H_5O$-Reste.

Beispiele für die Verbindung H–Z–H sind $H_2O$,

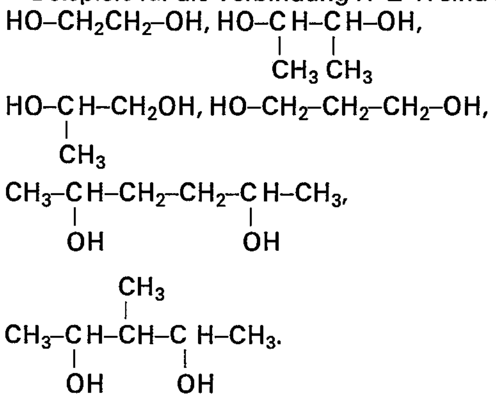

Verbindungen mit sekundären OH-Gruppen eignen sich besonders.

Die Herstellung des Entschäumers wird im allgemeinen so durchgeführt, dass man das Polyorganosiloxan mit einem Lösungsmittel, vorzugsweise mit Toluol oder Xylol vermischt und anschliessend mit einem Gemisch aus $R^2OH$, H–Z–H und Toluol schnell verrührt. In diese Mischung wird bei Raumtemperatur etwa die stöchiometrische Menge $NH_3$ eingeleitet. Anschliessend wird ein Überschuss an $NH_3$ eingeleitet und ca. 1 Stunde bei ca. 70 °C gerührt.

Nach dem Abkühlen wird das ausgefallene Salz abfiltriert und bei etwa 100 °C im Vakuum das Lösungsmittel entfernt. Diese bevorzugten Reaktionsbedingungen können jedoch den jeweiligen Erfordernissen angepasst werden und somit – in dem Fachmann bekannter Weise – von den hier genannten abweichen.

Die anfallenden gelblich gefärbten, klaren Lösungen besitzen je nach Zusammensetzung eine Viskosität zwischen 300 und 3500 mPa·S.

Die so hergestellten Siloxan-Polyoxyalkylen-Copolymeren eignen sich zur Herstellung von Entschäumungsmitteln für Kunststoffdispersionen und Dispersionsbeschichtungsstoffe.

Für das Entschäumungsmittel ist weiterhin ein Gehalt an hydrophobem Siliciumdioxid vorteilhaft.

Ein hydrophobes Siliciumdioxid ist ein Siliciumdioxid, dessen oberflächenständige Hydroxylgruppen durch Umsetzung mit einer organofunktionellen Siliconverbindung beseitigt worden sind. Zur Umsetzung der Hydroxylgruppen können beispielsweise Trimethylchlorsilan, Dimethyldichlorsilan, Hexamethyldisiloxan, Hexamethyldisilazan oder Trimethylmethoxysilan verwendet werden. Die Umsetzung des Siliziumdioxids mit der organofunktionellen Siliconverbindung macht das Siliciumdioxid im Vergleich zu seinem ursprünglich hydrophilen Charakter hydrophob.

Die BET-Oberfläche der hydrophoben Kieselsäuren kann zwischen 50 und 300 $m^2/g$ betragen. Optimale Ergebnisse werden erzielt, wenn die Oberfläche zwischen 80 und 140 $m^2/g$ beträgt.

Die Zugabe des hydrophoben Siliciumdioxids zur Entschäumerzubereitung ist zur Erzielung der Effekte nicht zwingend notwendig. Jedoch wird die zur schnellen Entschäumung notwendige Anwendungsmenge in vielen Fällen stark herabgesetzt, ohne dass durch den Zusatz nachteilige Eigenschaften entstehen.

Die Zugabe des hydrophoben Siliciumdioxids zu dem Siloxan-Polyoxyalkylen-Copolymeren kann in Mischaggregaten, Knetern oder Kugelmühlen erfolgen oder durch Einrühren mit Dissolverscheiben.

Es ist von Vorteil, wenn nach erfolgter Einbringung des Siliciumdioxids erwärmt wird, wobei die Erhitzungstemperatur zwischen 90 und 150 °C liegen kann, vorzugsweise zwischen 110 und 130 °C. Die Dauer des Erhitzungsvorganges beträgt zwischen 30 Minuten und 4 Stunden, bevorzugt sind 60 bis 90 Minuten.

Die nachfolgenden Beispiele sollen die Erfindung näher erläutern, ozne sie in ihrem Umfang einzuschränken.

Prozentangaben bedeuten, wenn nicht ausdrücklich anders vermerkt, Gewichtsprozente.

Zur Herstellung der Polyethersiloxane Copolymeren wurden nach DE-OS 2 802 668 hergestellte Acetoxypolysiloxane verwendet

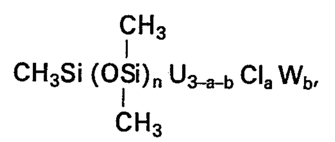

wobei a + b 0,5 und

W einen $C_4F_9SO_3$-Rest bedeutet, sowie auf Butanol gestartete Polyether, die Ethylenoxid- und Propylenoxideinheiten in wechselnder Folge beinhalten:

$$C_4H_9O\,[C_2H_4O]_x\,[C_3H_6O]_y\,H.$$

Ein Siloxanprodukt mit der theoretischen Zusammensetzung

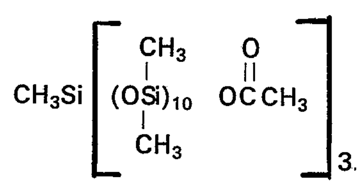

wird z.B. wie folgt hergestellt:

299 g (2 Mol) Methyltrichlorsilan werden mit 18 g (0,3 Mol) Perfluorbutansulfonsäure und anschliessend mit 3996 g (13,5 Mol) Octamethylcyclotetrasiloxan versetzt. Das Gemisch wird anschliessend auf 90 °C aufgeheizt und innerhalb 2 Stunden mit 800 g (134 Mol) Essigsäure versetzt. Während der Zugabe wird weiter hochgeheizt, so dass nach vollendeter Zugabe (HCL-Strom versiegt) die Temperatur von 130 °C erreicht wird. Es wird anschliessend 2 Stunden bei 130 °C gerührt.

Ausgeheizt wird bei 130 °C und 67 mbar.

Ausbeute: 4000 g

Acetat: 137 m Val/100 g.

Beispiel 1

Entschäumer-Herstellung

500 g [≙ 1,02 Val Acetat] eines Acetoxypolysiloxans mit n=16,9 Dimethylsiloxyeinheiten werden mit 2000 g getrocknetem Toluol verrührt. Hierzu wird bei Raumtemperatur innerhalb von 15 Minuten ein Gemisch zugegeben, das aus 1477,3 g [0,79 Val] Polyether [mit einem Molgewicht MG=1870 und einem Ethylenoxidgehalt von 45% sowie einem Propylenoxidgehalt von 55%], 10,35 g [0,23 Val] 2,3-Butandiol und 1500 g getrocknetem Toluol besteht. Ohne zu heizen werden bis zur Sättigung (mit ca. 8,67 g/h) innerhalb von ca. 2 Stunden 17,34 g getrockneter $NH_3$ eingeleitet. Anschliessend wird innerhalb 30 Minuten auf 70 °C eingeheizt, wobei der Ammoniakstrom auf 11,79 g/h gesteigert wird. Es wird 90 Minuten weitergerührt und anschliessend langsam abgekühlt. 30 Minuten nach Beginn der Abkühlphase wird der $NH_3$-Strom abgestellt.

Die durch Salz stark getrübte Lösung wird filtriert und aus dem Filtrat das Lösungsmittel bei max. 100 °C und 20 mbar ausgeheizt. Man erhält einen klaren, leicht gelb gefärbten Rückstand.

Ausbeute: 1978,5 g

$\eta$: 640 mPa·s $n_D^{20}$ =1,4475

Herstellung des Entschäumers

1860 g des nach oben stehender Vorschrift erhaltenen Polyether-Siloxan-Copolymers werden zusammen mit 40 g einer hydrophoben, gefällten Kieselsäure mit einer BET-Oberfläche von 110 $m^2/g$ in eine 3 Liter fassende Kugelmühle gegeben, die ausserdem mit 25 Porzellankugeln von 18 mm Durchmesser beschickt worden ist. Man lässt die gefüllte Kugelmühle bei etwa 50 Umdrehungen pro Minuten während 5 Stunden mechanisch drehen und überführt anschliessend den von den Mahlkugeln abgetrennten Inhalt der Kugelmühle in ein heizbares und evakuierbares Gefäss mit Rührer. Unter Anlegen eines Vakuums von 52 mbar wird während 3 Stunden auf 110 °C erhitzt. Man erhält eine trübe, viskose Flüssigkeit.

Beispiel 2

Entschäumer-Herstellung

11,0 kg [15,07 Val Acetat] eines Acetoxypolysiloxans mit einem Index von 30 werden mit 16,8 kg getrocknetem Toluol verrührt und eine Mischung von 23,17 kg eines Polyethers [mit einem Molgewicht von 2304 und einem Ethylenoxidgehalt von 41,5% und einem Propylenoxidgehalt von 58,5%] und 28 kg Toluol innerhalb von 15 Minuten zugegeben. Dann leitet man während ca. 45 Minuten 304 g $NH_3$ in die Mischung und erwärmt anschliessend auf 80 °C. Wenn diese Temperatur erreicht ist, lässt man 0,644 kg Isopropanol zulaufen und rührt weitere 2 Stunden bei 80 °C. Während dieser Zeit wird ein $NH_3$-Strom von ca. 195 l/h eingeleitet. Danach wird die Reaktionsmischung auf Raumtemperatur abgekühlt.

Die durch das Salz stark getrübte Lösung wird filtriert und vom Filtrat das Lösungsmittel bei max. 100 °C und 50 mbar abdestilliert.

Der Rückstand ist klar und leicht gelblich.

Ausbeute: 33,4 kg

$\eta$: 1560 mPa·s $n_D^{20}$ : 1,439.

Herstellung des Entschäumers

18,4 kg des nach obenstehender Vorschrift erhaltenen Polyether-Siloxan-Copolymers werden mit einem Dissolver handelsüblicher Bauart bei 400 U/Min. gerührt und nach 0,6 kg einer hydrophoben, gefällten Kieselsäure mit einer BET-Oberfläche von 130 $m^2/g$ bei Raumtemperatur während 1,5 Stunden verrührt. Die Mischung wird in einen heizbaren und evakuierbaren Kessel überführt und unter Anlegen eines Vakuums von 52 mbar während 3 Stunden auf 110 °C erhitzt. Man erhält eine trübe, viskose Flüssigkeit.

Beispiel 3

Anwendung des Entschäumers

Weisslack 1

223 g Titandioxid (Rutiltyp), 37 g Wasser, 3 g eines handelsüblichen Pigmentbenetzers auf Basis eines Polyacrylat-Salzes (40%ig in Wasser, z.B. Dispex G 40[R]; Handelsprodukt der Fa. Allied Colloids Mfg. Co. Ltd., Bradford/England), 3 g des erfindungsgemässen Entschäumers des Beispiels 2 und 6,1 g eines handelsüblichen Verdikkungsmittels auf Basis eines Polyetherurethans (10%ig in Wasser, z.B. Borchigel L 75[R], Handelsprodukt der Fa. Gebr. Borchers, Düsseldorf) werden mit einem Dissolver (Umfangsgeschwindigkeit der Dissolverscheibe = 20 m/s) zu einer zähflüssigen Pigmentpaste dispergiert. Nach beendetem Anreiben der Pigmentpaste wird unter langsamen Rühren eine Mischung aus 592 g einer handelsüblichen Copolymerisat-Dispersion auf Basis von Acrylat-Monomeren (46,5%ig), 20 g Wasser, 31 g Butyldiglycol und 30 g Ethylglycol zugesetzt. Zur Verbesserung der Pigmentbenetzung wird der Lack anschliessend zusätzlich auf einer Perlmühle abgerieben.

Nach dem Abreiben ist der Lack nahezu schaumfrei, eine Volumenänderung ist nicht erkennbar.

Der Lack wird nach 1 Std. mit einer Lackhantel (60 mm Spaltbreite, 120 µm Spalthöhe, Lackhantel der Fa. Pausch, 5657 Haan) auf einer Glasplatte aufgezogen und 4 Std. im Normalklima 23/50 – DIN 50 014 getrocknet. Die Oberfläche erscheint glatt und störungsfrei. Bei Betrachtung der Beschichtung sind nur vereinzelt «Nadelstiche» durch Luftbläschen zu erkennen. Nach einwöchiger Lagerung wird der Lack mit einem Flachpinsel (Breite 5 cm) auf eine entfettete Aluminiumplatte

(50 × 50 cm) gestrichen. Die Lackoberfläche ist kraterfrei und ohne Blasen.

Beispiel 4
(Vergleichsbeispiel mit einem handelsüblichen Siliciumentschäumer)

Weisslack 2 wird in gleicher Weise wie Weisslack 1 hergestellt, jedoch wird der erfindungsgemässe Entschäumer durch 2 g eines handelsüblichen Entschäumers für Dispersionslacke (100%ig, auf Basis organisch modifizierter Polysiloxane) ersetzt. Nach der Abreibung ist der Lack nahezu schaumfrei, eine Volumenänderung ist nicht erkennbar. Der Lack wird nach 1 Std. mit einer Lackhantel (60 mm Spaltbreite, 120 µm Spalthöhe, Lackhantel der Fa. Pausch, 5657 Haan) auf einer Glasplatte aufgezogen und 4 Std. im Normalklima 23/50 – DIN 50 014 – getrocknet. Die Oberfläche ist schaumfrei, aber durch zahlreiche Krater gestört. Nach einwöchiger Lagerung wird der Lack mit einem Flachpinsel (Breite 5 cm) auf eine entfettete Aluminiumplatte (50 × 50 cm) gestrichen.

Die Lackoberfläche ist blasenfrei, aber mit zahlreichen Kratern überdeckt.

Beispiel 5
(Vergleichsbeispiel mit einem handelsüblichen Entschäumer auf Mineralölbasis)

Weisslack 3 wird in gleicher Weise wie Weisslack 1 hergestellt, jedoch wird der erfindungsgemässe Entschäumer durch 5 g eines handelsüblichen Entschäumers für Dispersionslacke auf Basis eines oxethylierten Sojaöls und von Erdalkalistearaten, ca. 8%ig in Mineralöl/Petroleum (80:10) ersetzt.

Nach dem Abreiben ist der Lack verschäumt, das Volumen ist deutlich erkennbar vergrössert. Der Lack lässt sich wegen des Schaumes nach 1 Std. noch nicht mit einer Lackhantel auf eine Glasoberfläche aufziehen.

Nach einwöchiger Lagerung ist der Lack schaumfrei. Beim Aufstrich mit einem Flachpinsel (Breite 5 cm) auf eine entfettete Aluminiumplatte erhält man eine kraterfreie, aber mit zahlreichen Schaumbläschen übersäte Oberfläche.

**Patentanspruch**

1. Verwendung eines Produktes, bestehend aus

a) 80 bis 100 Gew.-% eines Polyoxyalkylen-Siloxan-Copolymers der allgemeinen Formel

$$[R^1Si\,(OSiR_2)_n]_m\,Z_{m-1}\,(OR^2)_{m+2},$$

in der

R eine gegebenenfalls halogensubstituierte Alkylgruppe mit bis zu 4 C-Atomen,

$R^1$ den Substituenten R bzw. einen Phenylrest,

$R^2$ eine Gruppe der Zusammensetzung

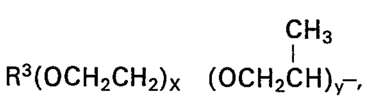

Z eine difunktionelle Einheit –O– oder

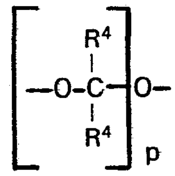

darstellt, wobei

$R^3$ ein Kohlenwasserstoffrest mit bis zu 6 C-Atomen,

$R^4$ unabhängig voneinander Wasserstoff oder $R^3$,

n eine Zahl zwischen 3 und 40,

m eine Zahl zwischen 1 und 15,

x eine Zahl zwischen 0 und 68,

y eine Zahl zwischen 0 und 52,

x + y eine Zahl zwischen 1 und 68,

p eine Zahl zwischen 2 und 12 bedeutet; und

b) 0–20 Gew.-% eines hydrophoben Siliciumdioxids als Entschäumer für Kunststoffdispersionen und Dispersionsbeschichtungsstoffe.

**Revendication**

Utilisation d'un produit constitué de:

a) 80 à 100% en poids d'un copolymère de polyoxyalkylène-siloxane de formule générale:

$$[R^1Si\,(OSiR^2)_n]_m\,Z_{m-1}\,(OR^2)_{m+2}$$

dans laquelle

R représente un groupe alkyle contenant jusqu'à 4 atomes de carbone et éventuellement substitué par un atome d'halogène,

$R^1$ représente les substituants R ou un groupe phényle,

$R^2$ représente un groupe de la composition suivante:

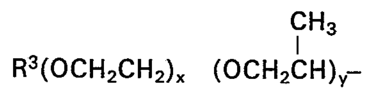

Z représente un motif difonctionnel –O– ou

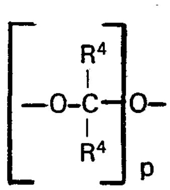

où

$R^3$ représente un radical d'hydrocarbure contenant jusqu'à 6 atomes de carbone,

les radicaus $R^4$ représentent chacun indépendamment l'un de l'autre un atome d'hydrogène ou $R^3$,

n représente un nombre compris entre 3 et 40,

m représente un nombre compris entre 1 et 15,

x représente un nombre compris entre 0 et 68,

y représente un nombre compris entre 0 et 52,

x + y représente un nombre compris entre 1 et 68,

p représente un nombre compris entre 2 et 12, et

b) 0–20% en poids d'un dioxyde de silicium

hydrophobe, comme agent antimousse pour dispersions de matières synthétiques et matières d'enduction en dispersion.

## Claim

1. Use of a product consisting of

a) 80 to 100% by weight of a polyoxyalkylenesiloxane copolymer of the general formula

$$[R^1Si\,(OSiR_2)_n]_m\,Z_{m-1}\,(OR^2)_{m+2}$$

in which

R represents an optionally halogen-substituted alkyl group with up to 4 C atoms,

$R^1$ represents the substituent R or a phenyl radical,

$R^2$ represents a group of the composition

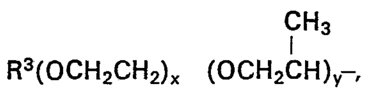

Z represents a difunctional unit –O– or

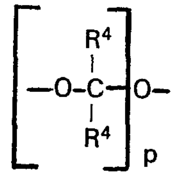

wherein

$R^3$ denotes a hydrocarbon radical with up to 6 C atoms,

$R^4$ denotes independently of one another hydrogen or $R^3$,

n denotes a number between 3 and 40,

m denotes a number between 1 and 15,

x denotes a number between 0 and 68,

y denotes a number between 0 and 52,

x + y denotes a number between 1 and 68, and

p denotes a number between 2 and 12; and

b) 0–20% by weight of a hydrophobic silicon dioxide as a defoamer for plastic dispersions and disperse coating materials.